# EUROPÄISCHE PATENTANMELDUNG

(11) **EP 1 134 566 A1**
(43) Veröffentlichungstag der Anmeldung: **19.09.2001**
(21) Anmeldenummer: 01102467.6
(22) Anmeldetag: 03.02.2001
(51) Int. Cl.: G01K 11/32, G01K 5/52

(54) **Verfahren zur faseroptischen Temperaturmessung und faseroptischer Temperatursensor**

(30) Priorität: 14.03.2000 DE 10012291
(71) Anmelder: MASCHINENFABRIK REINHAUSEN GmbH, 93059 Regensburg (DE)
(72) Erfinder: Helmig, Christian, Dipl.-Ing., 59457 Werl (DE); Teunissen, Jörg, Dipl.-Ing., 40885 Ratingen (DE)

(57) **Zusammenfassung**

Die Erfindung betrifft ein Verfahren zur faseroptischen Temperaturmessung und einen dafür geeigneten faseroptischen Temperatursensor. Gemäß der Erfindung ist auf an sich bekannte Weise in eine Glasfaser ein Bragg-Gitter eingeschrieben; in diesem Bereich wird die Glasfaser in einer Glaskapillare geführt, und der verbleibende Hohlraum dazwischen ist mit einem aushärtenden Kleber gefüllt. Bei einer Änderung der zu messenden Temperatur entsteht ein gezielter mechanischer Druck auf den Bragg-Gitter-Bereich der Glasfaser auf Grund der unterschiedlichen thermischen Ausdehungskoeffizienten von Glaskapillare einerseits und Klebstoff andererseits, wodurch eine definierte Dehnung erfolgt, die zu einer zusätzlichen Änderung der Reflexionswellenlänge des eingebrachten Bragg-Gitters als Maß für die Temperatur führt.

## Beschreibung

Die Erfindung bezieht sich auf ein Verfahren zur faseroptischen Temperaturmessung mittels eines faseroptischen Temperatursensors und einen entsprechenden geeigneten faseroptischen Temperatursensor zur Online-Überwachung von energietechnischen Anlagen und Geräten auf Basis der Temperaturdetektion mit Faser-Bragg-Gittern.

Die Online-Überwachung von energietechnischen Anlagen und Betriebsmitteln gewinnt in der elektrischen Energietechnik aufgrund der Sicherheit und einer angestrebten wirtschaftlichen Betriebsführung, z. B. hinsichtlich der Lebensdauer, immer mehr an Bedeutung. Eine besonders wichtige Rolle innerhalb der zu erfassenden und zu überwachenden Meßgrößen spielt hierbei die Temperatur an kritischen Stellen oder gefahrgeneigten Teilen oder Bereichen der jeweiligen Anlage oder des jeweiligen Gerätes. Für diese Anwendungsfälle, bei denen eine potentialfreie Temperaturmessung erforderlich ist, etabliert sich zunehmend die faseroptische Meßtechnik.

Zur Messung von Temperaturen sind faseroptische Temperatursensorsysteme bekannt, die nach verschiedenen Prinzipien arbeiten:

Lumineszens-Temperatursensoren basieren auf der als Photolumineszens bekannten Eigenschaft verschiedener Materialien, bei optischer Anregung in einem bestimmten Spektralbereich eine gegenüber dem Anregungslicht längerwellige charakteristische Strahlung zu emittieren. Als Meßgröße kann dabei entweder die temperaturabhängige Änderung der spektralen Intensitätsverteilung oder die Abklingzeit des Lumineszenslichtes genutzt werden.

Thermochrome Temperatursensoren nutzen den Effekt, daß Amplitude und spektrale Lage der Lichtabsorption fester und flüssiger Stoffe temperaturabhängig sind. Die Stärke der entsprechenden Absorption bzw. Transmission ist somit ein Maß für die gemessene Temperatur.

Interferometrische Sensoren nutzen den Einfluß der Temperatur auf die Phase; sie sind sehr temperaturempfindlich, jedoch ist der Sensorbereich üblicherweise nicht genau lokalisierbar.

Polarimetrische Sensoren nutzen den temperaturabhängigen Einfluß der Doppelbrechung auf die Phase der Lichtwelle. Die Temperaturabhängigkeit ist besonders groß bei einer stark doppelbrechenden Faser, weswegen hierzu in der Regel kommerziell erhältliche HiBi-Fasern (High-Birefringent) verwendet werden. Ein solcher polarimetrischer Sensor ist beispielsweise aus der DE 196 44 885 A1 bekannt. Nachteilig ist auch bei diesen Sensoren, daß bereits die Zuleitung zum eigentlichen Sensorbereich temperaturempfindlich ist und damit keine "punktgenaue Temperaturdetektion etwa an verschiedenen Stellen eines elektrischen Betriebsmittels möglich ist.

Eine weitere Möglichkeit zur Temperaturdetektion besteht in der Verwendung von Fasergitter-Sensorsystemen. Dabei werden nach Entfernen des Coating-Materials auf einer definierten Länge zur Sensibilisierung von Standard-Quarzglasfasern für die Temperaturmessung mikrostrukturierte Brechzahlgitter in den Kern des Lichtwellenleiters an definierten Stellen entlang der Glasfaser eingeschrieben. Diese monolithisch in die Faser eingebrachten Gitter, sogenannte Faser-Bragg-Gitter, sind in der Lage, bestimmte Wellenlängen des Lichtes zu reflektieren. Die Bragg-Reflexionswellenlänge ist dabei von der Fasertemperatur und der Dehnung der Faser abhängig. Zur Erhöhung der mechanischen Stabilität der Bragg-Gitter-Bereiche, können die Gitter auch während des Faserziehprozesses mit Laserimpulsen in den Faserkern eingeschrieben werden. Nachteilig bei dieser Methode ist der produktionstechnisch bedingte niedrigere Reflexionsgrad des Bragg-Gitters.

Aufgabe der Erfindung ist es, ein verbessertes Verfahren zur faseroptischen Temperaturmessung auf der Basis von Faser-Bragg-Gittern anzugeben, das zu einer Erhöhung der Sensitivität führt und eine genaue punktuelle oder quasiverteilte Temperaturmessung gestattet. Aufgabe der Erfindung ist es weiterhin, einen für ein solches Verfahren besonders geeigneten Temperatursensor anzugeben, der außer den bereits genannten Vorteilen auch noch eine große mechanische Stabilität bei einfacher Herstellung aufweisen soll.

Diese Aufgabe wird erfindungsgemäß gelöst durch ein Verfahren zur faseroptischen Temperaturmessung gemäß Patentanspruch 1 sowie einen faseroptischen Temperatursensor gemäß Patentanspruch 2.

Die Unteransprüche betreffen besonders vorteilhafte Weiterentwicklungen des faseroptischen Temperatursensors.

Der allgemeine erfinderische Gedanke besteht darin, durch Ausnutzung der unterschiedlichen thermischen Ausdehnungskoeffizienten von Quarzglas einerseits und dem verwendeten Klebstoff andererseits eine definierte Dehnung von per se bekannten Faser-Bragg-Gittern durch einen gezielt erzeugten mechanischen Druck bei Temperaturvariation hervorzurufen. Dieser Effekt der mechanischen Dehnung überlagert sich mit dem Temperatureffekt der Fasergitter und führt zu einer Erhöhung der Meßempfindlichkeit. Das erfindungsgemäße Verfahren und der erfindungsgemäße Temperatursensor lassen sich beispielsweise gezielt für eine potentialfreie Detektion der Temperatur in energietechnischen Anlagen, Geräten und Betriebsmitteln, beispielsweise Leistungstransformatoren und/oder Stufenschaltern an solchen Leistungstransformatoren, einsetzen.

Besonders vorteilhaft bei einem solchen Einsatz der Erfindung ist zunächst die Möglichkeit der genauen Definition des entsprechenden Ortes im Inneren des jeweiligen Betriebsmittels, in dem die Temperatur erfaßt werden soll. Nur an dieser Stelle, an der die Temperatur gemessen werden soll, wird der erfindungsgemäße Temperatursensor in das entsprechende Betriebsmittel integriert.

Die Erfindung soll nachfolgend anhand von Zeichnungen beispielhaft noch näher erläutert werden:

Es zeigen:
- Fig. 1:: einen schematischen Ablauf eines erfindungsgemäßen Verfahrens zur faseroptischen Temperaturmessung gemäß Patentanspruch 1
- Fig. 2:: einen erfindungsgemäßen Temperatursensor gemäß Patentanspruch 2, wobei die wesentlichen Merkmale dieses Temperatursensors noch einmal vergrößert gezeigt sind
- Fig. 3:: eine komplette Temperaturmeßanordnung mit einem erfindungsgemäßen Temperatursensor, wobei dessen wesentlichen Merkmale wiederum vergrößert gezeigt sind
- Fig. 4:: die jeweilige Größe der Wellenlänge, abhängig von der jeweiligen Temperatur, gemessen sowohl nach der Erfindung als auch, zum Vergleich, nach dem Stand der Technik.

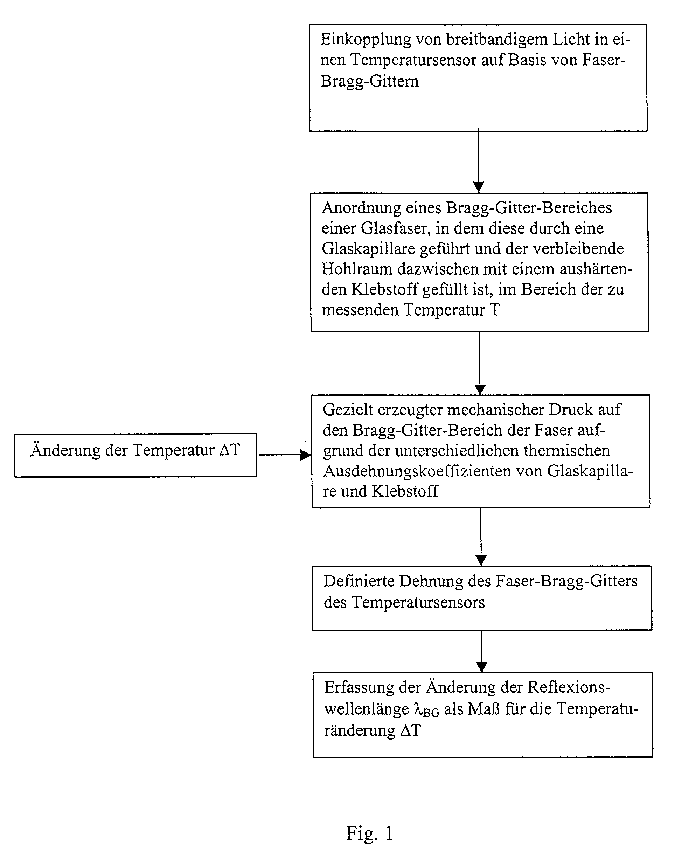

Aus dem in Figur 1 schematisch dargestellten Ablauf des erfindungsgemäßen Verfahrens zur faseroptischen Temperaturmessung ist zu entnehmen, daß zunächst breitbandiges Licht in das Temperatursensorsystem mit dem erfindungsgemäßen Temperatursensor auf Bragg-Gitter-Basis eingekoppelt wird. Der Bereich einer Faser, in dem in dieser Faser ein Bragg-Gitter eingeschrieben ist, wird durch eine Quarzglaskapillare geführt und der verbleibende Hohlraum mit einem aushärtenden Klebstoff aufgefüllt. Der Temperatursensor wird im Bereich der zu messenden Temperatur installiert. Durch eine Temperaturänderung ΔT wird aufgrund der unterschiedlichen thermischen Ausdehnungskoeffizienten von Quarzglas und dem verwendeten Klebstoff gezielt ein mechanischer Druck auf den Faser-Gitter-Bereich erzeugt. Dieser wirkt sich durch eine definierte Dehnung des Bragg-Gitters aus. Die meßtechnische Erfassung der Änderung der Bragg-Reflexionswellenlänge λ_{BG} ist ein Maß für die Temperaturänderung ΔT im Betriebsmittel.

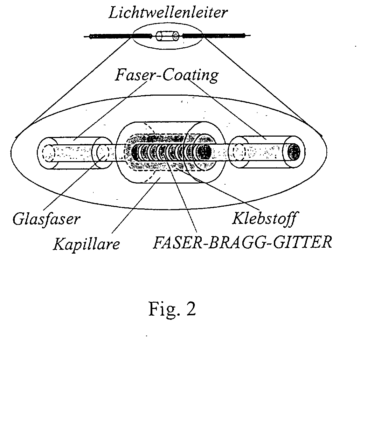

Figur 2 zeigt einen erfindungsgemäßen faseroptischen Temperatursensor. Wesentliche Merkmale sind vergrößert dargestellt. Es ist zu sehen, daß in die Glasfaser in einem bestimmten Bereich ein Faser-Bragg-Gitter eingeschrieben ist und genau dieser Bereich herstellungsbedingt vom Coating-Material befreit ist. Dieser Bereich ist durch eine Glaskapillare hindurchgeführt. Die Glaskapillare weist einen Innendurchmesser auf, der größer ist als der Außendurchmesser der Glasfaser ohne ihr Coating. Der Hohlraum zwischen der Glasfaser und der Kapillare ist mit einem Klebstoff ausgefüllt. Als Klebstoff ist beispielsweise ein Epoxidharzkleber der Marke Delo mit einem thermischen Ausdehnungskoeffizienten von 90 ^{*} 10⁻⁶ K⁻¹ geeignet. Als Glas für die Glaskapillare ist Quarzglas mit einem thermischen Ausdehnungskoeffizienten von 0,5 ^{*} 10⁻⁶ K⁻¹ geeignet.

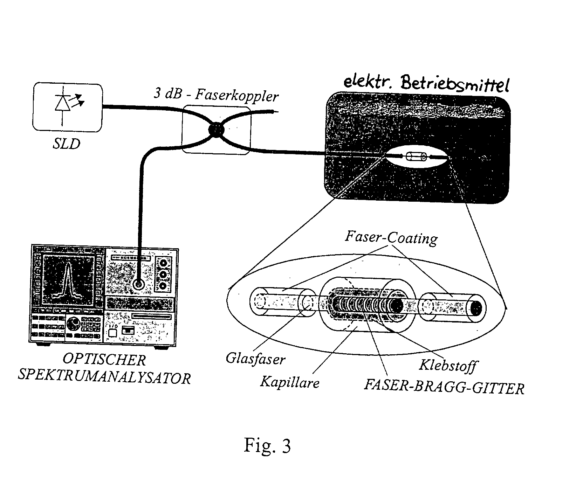

In Figur 3 ist eine vollständige Temperaturmeßanordnung mit einem erfindungsgemäßen faseroptischen Temperatursensor dargestellt. Der Temperatursensor ist im jeweiligen Betriebsmittel an der Stelle, an der dessen Temperatur T erfaßt werden soll, installiert. Mit Hilfe einer Superlumineszensdiode (SLD) wird von außen Licht über einen 3 dB-Faserkoppler in den Lichtwellenleiter (LWL) mit dem Temperatursensor eingebracht. Mit einem optischen Spektrumanalysator wird die Bragg-Reflexionswellenlänge des im Temperatursensor enthaltenen Faser-Bragg-Gitters bei Variation der Temperatur detektiert.

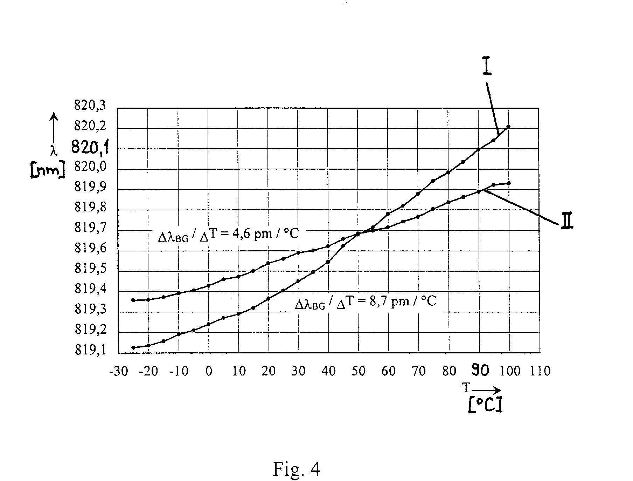

Die in Figur 4 dargestellte Grafik zeigt die Temperaturabhängigkeit des erfindungsgemäßen Temperatursensors anhand der Meßkurve I. Die Meßkurve II zeigt zum Vergleich eine Referenzmessung mit einem dehnungsunbeeinflussten Faser-Bragg-Gitter nach dem Stand der Technik bei Temperaturvariation. Im Temperaturbereich von -25 °C bis 100 °C ist eine deutliche Abhängigkeit der Bragg-Reflexionswellenlänge von der jeweils vorherrschenden Temperatur erkennbar. Die gemittelte Steigung der Meßkurve für den erfindungsgemäßen Temperatursensor beträgt 8,7 pm / °C. Die gemittelte Steigung der Referenzmeßkurve nach dem Stand der Technik dagegen beträgt 4,6 pm / °C. Aus dieser Grafik ist deutlich die erhöhte Sensitivität der Erfindung, resultierend aus der weiter oben beschriebenen Überlagerung des Effektes der mechanischen Dehnung mit dem - bekannten - Temperatureffekt, zu erkennen. Es tritt also eine Meßsignalverstärkung auf. Gleichzeitig wird der Bereich des Faser-Bragg-Gitters durch die Glaskapillare und den Kleber vor mechanischen Einflüssen geschützt; der gesamte Temperatursensor ist mechanisch stabil und widerstandsfähig. Er kann im übrigen sowohl als Punktsensor als auch als quasiverteilter Sensor eingesetzt werden.

## Patentansprüche

1. Verfahren zur faseroptischen Temperaturmessung mit einem in einer Glasfaser eingebrachten Bragg-Gitter, dessen Reflexionswellenlänge von der Temperatur der Umgebung abhängig ist, und wobei breitbandiges Licht in die Glasfaser und damit das Bragg-Gitter eingekoppelt wird,
**dadurch gekennzeichnet,**
daß im Bereich des Bragg-Gitters die Glasfaser in einer Glaskapillare geführt und der verbleibende Hohlraum dazwischen mit einem aushärtenden Kleber gefüllt wird,
daß danach die Glaskapillare im Bereich der zu messenden Temperatur angeordnet wird,
daß durch eine Änderung der zu messenden Temperatur ein gezielter mechanischer Druck auf den Bragg-Gitter-Bereich der Glasfaser aufgrund der unterschiedlichen thermischen Ausdehnungskoeffizienten von Glaskapillare einerseits und Klebstoff andererseits ausgeübt wird, derart, daß eine definierte Dehnung erfolgt, die zu einer zusätzlichen Änderung der Reflexionswellenlänge λ_{BG} des eingebrachten Bragg-Gitters führt
und daß die gesamte Änderung der Reflexionswellenlänge λ_{BG} als Maß für die Temperaturänderung ΔT gemessen wird.

2. Faseroptischer Temperatursensor mit einem in einer Glasfaser eingebrachten Bragg-Gitter, dessen Reflexionswellenlänge von der Temperatur der Umgebung abhängig ist,
**dadurch gekennzeichnet,**
**daß** der Bereich der Glasfaser, in dem das faseroptische Bragg-Gitter eingeschrieben ist, in einer Glaskapillare geführt ist und der verbleibende Hohlraum dazwischen mit einem aushärtenden Kleber ausgefüllt ist, derart, daß bei einer Temperaturänderung ein gezielter mechanischer Druck auf das Bragg-Gitter ausgeübt wird.

3. Faseroptischer Temperatursensor nach Patentanspruch 2,
**dadurch gekennzeichnet,**
**daß** als Klebstoff ein Epoxidharzklebstoff, beispielsweise ein DELO-Kleber mit einem thermischen Ausdehnungskoeffizienten von 90 ^{*} 10⁻⁶ K⁻¹, verwendet wird.

4. Faseroptischer Temperatursensor nach Patentanspruch 2 oder 3,
**dadurch gekennzeichnet,**
**daß** die Glaskapillare aus Quarzglas mit einem thermischen Ausdehnungskoeffizienten von 0,5 ^{*} 10⁻⁶ K⁻¹ besteht.
